# FASCICULE DE BREVET EUROPEEN

(11) **EP 2 165 103 B1**
(45) Date de publication et mention de la délivrance du brevet: **31.12.2014**
(21) Numéro de dépôt: 08805932.4
(22) Date de dépôt: 04.06.2008
(51) Int. Cl.: G02B 6/44, H02G 3/00, G02B 6/50

(54) **SUPPORT POUR CABLE A FIBRE OPTIQUE**
HALTER FÜR EIN GLASFASERKABEL
HOLDER FOR A FIBRE-OPTIC CABLE

(30) Priorité: 04.06.2007 FR 0755437
(43) Date de publication de la demande: 24.03.2010
(73) Titulaire: Free, Paris 75008 (FR)
(72) Inventeur: FORTIER, Eric, F-77720 Aubepierre Ozouer Le Repos (FR)
(74) Mandataire: Dupuis-Latour, Dominique
(86) Numéro de dépôt international: PCT/FR2008/050991
(87) Numéro de publication internationale: WO 2008/152329

(56) Documents cités:
- EP-A- 0 838 626
- GB-A- 916 923
- GB-A- 1 186 256
- US-A- 5 988 570

## Description

L'invention concerne l'installation des câbles à fibre optique.

Elle s'applique en particulier, mais non exclusivement, à l'installation de câbles à fibre optique en milieu souterrain, notamment en milieu souterrain humide tel qu'une conduite d'égout ou un tunnel de transport souterrain.

On connaît déjà du document EP-1 074 773 un support pour câble à fibre optique. Ce support comprend deux montants en regard l'un de l'autre reliés entre eux par une barre transversale. Le support est réalisé en métal, par exemple en acier.

Un tel support est destiné à être fixé à une paroi, par exemple d'une conduite d'égout, et à supporter plusieurs câbles à fibre optique. Pour acheminer les câbles d'un point à un autre, on dispose généralement un support tous les 50 centimètres le long du trajet séparant les deux points afin de supporter le poids des câbles.

Toutefois, un tel support est soumis à des conditions environnementales agressives, liées notamment à la chaleur, la pollution et l'humidité. Ces conditions entraînent un vieillissement et une dégradation accélérée du support, notamment par corrosion. Ainsi, du fait de sa structure affaiblie, il est nécessaire de changer le support au bout de quelques années pour éviter qu'il ne cède sous le poids des câbles. Une solution pour résoudre ce problème consiste à surdimensionner le support pour le rendre plus robuste, même lorsqu'il est affaibli. Cependant, cette solution n'est que temporaire car elle ne fait que prolonger provisoirement la durée de vie du support. Elle augmente de surcroît les coûts de fabrication et de transport des supports.

Un but de la présente invention est d'éviter le surdimensionnement du support.

, Le US 5 988 570 A décrit un support de câble, notamment de câble à fibres optiques, présentant une section en forme de U et dont les différentes parties qui le constituent sont des parties massives. Le but recherché par ce support est essentiellement de ne pas endommager les fibres des câbles, par exemple du fait d'une courbure excessive ou d'un pincement du câble. Le sujet de la déformation du support n'est pas évoqué.
Le 0 838 626 A2 décrit un support pour un élément tubulaire tel qu'une ligne d'alimentation de carburant ou une conduite de circuit hydraulique de freinage d'un véhicule automobile. Le but recherché est d'éviter les vibrations en découplant l'élément tubulaire d'avec le châssis sur lequel est monté le support. Le support décrit inclut une structure "en nid d'abeilles", dont la fonction est d'assurer un amortissement et une absorption des vibrations transmises par l'élément tubulaire. Cet amortissement est obtenu par une déformation des cellules du nid d'abeilles, à la manière d'un coussin souple qui serait intercalé entre l'élément tubulaire (sujet aux vibrations) et le support (rigide) fixé au châssis du véhicule et soutenant l'élément tubulaire.

Le problème est résolu, selon l'invention, par un support correspondant au préambule de la revendication 1, et présentant les caractéristiques énoncées dans la partie caractérisant de cette même revendication.

A cet effet, l'invention a pour objet un support pour câble à fibre optique, comprenant deux montants en regard l'un de l'autre, le support étant en matière synthétique, notamment en matière plastique.

Le support selon l'invention ne se dégrade pas sous l'effet des conditions environnementales. En effet, la matière synthétique est inerte vis-à-vis des conditions environnementales. Ainsi, il n'est pas nécessaire de surdimensionner le support pour allonger sa durée de vie. De plus, les coûts de fabrication et de transport des supports sont réduits. Le support est d'une seule pièce.

Selon d'autres caractéristiques optionnelles du support selon l'invention :
- Le support comprend une structure en nids d'abeilles. Cette structure permet de rigidifier le support et d'augmenter sa résistance sans modifier ses dimensions. Ainsi, la capacité du support, c'est-à-dire le nombre de câbles pouvant être supportés par un tel support, est accrue.
- Les dimensions du support et des cellules de la structure en nids d'abeilles sont telles que la moitié au moins des cellules de la structure, de préférence au moins les trois quarts, sont tronquées. De telles cellules sont faciles à réaliser du fait qu'elles présentent une taille relativement importante. De manière surprenante, on a constaté que ces cellules permettent de rigidifier suffisamment le support, et aussi bien que des cellules non tronquées. Chaque cellule a une forme de base hexagonale.
- Le support présente une surface d'appui interne destinée à être en contact avec au moins un câble et une surface externe, les surfaces étant reliées entre elles par une nervure. De préférence, cette nervure est sensiblement perpendiculaire aux surfaces interne et externe.
- La structure en nids d'abeille présente des parois dont les génératrices sont sensiblement parallèles aux surfaces externe et interne. De préférence, les parois s'étendent sensiblement perpendiculairement à la nervure. Les parois relient les surfaces entre elles.

Dans un mode de réalisation de l'invention, le support comporte un prolongement d'au moins un des montants, apte à servir d'appui latéral, le prolongement présentant de préférence une dimension, dans une direction perpendiculaire à un plan défini par les montants, supérieure à la dimension correspondante du montant qui le porte.

Le prolongement d'appui permet d'augmenter la surface de contact entre le support et la paroi contre laquelle il s'appuie latéralement. De préférence, le prolongement permet se stabiliser le support en évitant une éventuelle rotation du support autour du montant s'appuyant contre la paroi.

Avantageusement, le support comporte une jambe de force.

Cette jambe de force permet de transférer sur la paroi d'appui une partie des forces liées au poids des câbles supportés par le support. La résistance du support est ainsi améliorée.

Selon une autre caractéristique optionnelle du support selon l'invention, le support comporte au moins un orifice de fixation du support à une paroi, l'orifice étant de préférence unique.

Convenablement positionné, l'orifice unique assure l'immobilisation du support, avec l'aide de la seule gravité. La pose du support est donc simple et rapide à effectuer.

De façon optionnelle, le support présente une surface d'appui interne s'étendant d'un montant à l'autre et dépourvue d'angle.

Une telle surface d'appui ne crée pas d'amorce de rupture comme le ferait un angle. Ainsi, la résistance du support est améliorée. De plus, la surface étant dépourvue d'angle, elle présente un rayon de courbure qui peut être adapté au rayon externe des câbles que le support est destiné à supporter. La capacité du support est ainsi optimisée.

Avantageusement, le support est agencé de sorte qu'une épaisseur locale du support passe par un maximum à la base d'au moins un des montants.

Le maximum permet d'assurer que le support présente une résistance augmentée à la base de ces montants. En particulier, l'agencement permet d'éviter un éventuel écartement des montants l'un par rapport à l'autre sous l'effet d'une force latérale liée au poids des câbles.

Dans un mode de réalisation du support selon l'invention, le support comporte au moins deux logements, chaque logement étant apte à recevoir un câble à fibre optique.

Un tel support permet de maintenir et de supporter chaque câble indépendamment les uns des autres.

L'invention a également pour objet un ensemble comprenant au moins un support tel que défini ci-dessus fixé à une paroi et au moins une fibre optique reçue entre les montants.

L'invention sera mieux comprise à la lecture de la description qui va suivre, donnée uniquement à titre d'exemple et faite en se référant aux dessins dans lesquels :
- la figure 1 est une vue en perspective d'un ensemble comprenant un support pour câble à fibre optique selon un premier mode de réalisation de l'invention, le support étant fixé à une paroi et supportant deux câbles ;
- la figure 2 est une vue de face du support de la figure 1 ;
- la figure 3 est une vue de gauche du support de la figure 2 selon la flèche III ;
- la figure 4 est une vue de droite du support de la figure 2 selon la flèche IV ;
- la figure 5 est une vue de face d'un support pour câble à fibre optique selon un deuxième mode de réalisation de l'invention ;
- la figure 6 est une vue de gauche du support de la figure 5 selon la flèche VI;
- la figure 7 est une vue de droite du support de la figure 5 selon la flèche VII.

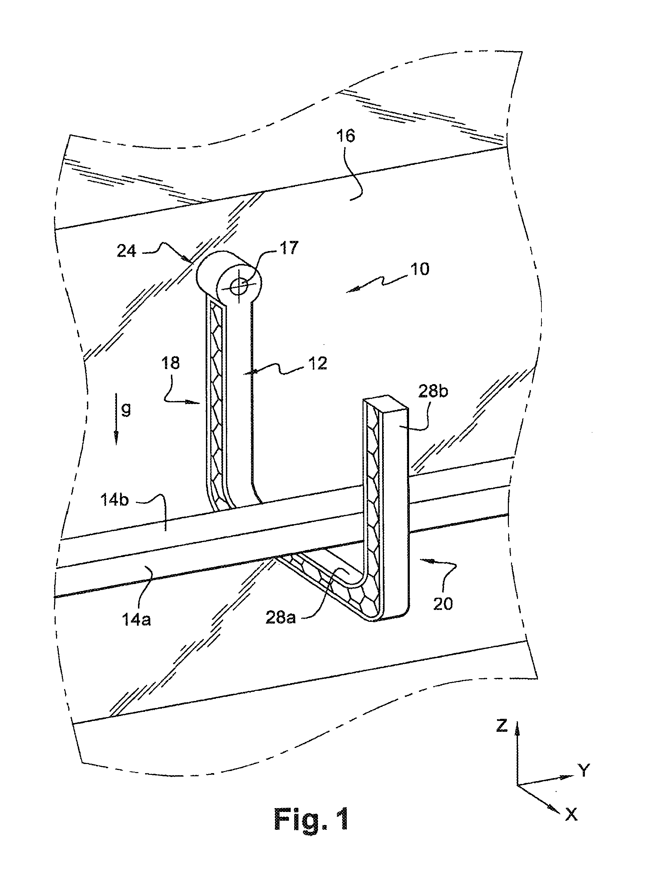

On a représenté sur les figures 1 à 7, l'ensemble et le support selon l'invention. Sur ces figures, on a représenté des axes X, Y, Z orthogonaux entre eux correspondant aux orientations axiale Y, transversale X et verticale Z du support tel qu'illustré. Les directions X et Y sont horizontales.

On a représenté sur la figure 1 un ensemble selon l'invention désigné par la référence générale 10. Cet ensemble 10 comprend un support 12 conforme à un premier mode de réalisation et deux câbles 14a, 14b à fibres optiques portés par le support 12. Le support 12 est fixé à une paroi verticale plane 16 par l'intermédiaire d'une vis 17.

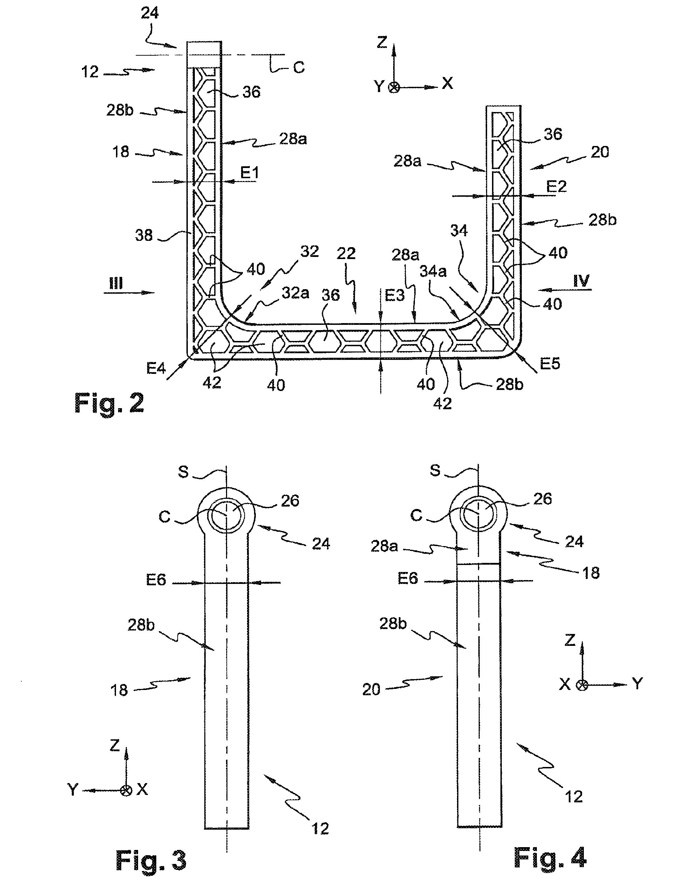

Comme également illustré sur la figure 2, le support 12 forme ici un crochet et présente une forme générale en « U » et comprend deux montants rectilignes 18, 20 en regard l'un de l'autre et reliés entre eux à leur extrémité inférieure par une barre transversale rectiligne 22 du support. Le support 12 présente un plan de symétrie S parallèle au plan XZ. Les montants 18, 20 présentent des axes principaux parallèle à la direction Z et s'étendent parallèlement l'un à l'autre, perpendiculairement à la barre transversale 22 qui s'étend selon la direction X. Le montant 18 présente une longueur suivant la direction Z plus grande, ici de 30 %, que la longueur du montant 20 suivant cette direction Z. Le rapport des longueurs suivant la direction Z de chaque montant 18, 20 sur la longueur suivant la direction X de la barre 22 est supérieur à 0,5 et même à 0,8 ici. Les montants 18, 20 présentent une forme générale parallélépipédique. En l'espèce, la longueur de la barre suivant la direction X est inférieure ou égale à 10cm tout comme la hauteur de chaque montant 18, 20. Le support 12 présente ici une dimension hors-tout de 10 cm*10 cm. Ce dimensionnement du support 12 permet de limiter les coûts d'installation et d'exploitation du support, notamment les coûts liés au paiement d'une redevance sur le volume occupé par le support et les câbles, par exemple dans une artère d'un égout.

Comme représenté sur les figures 1 à 4, le montant 18 le plus long comprend une extrémité supérieure libre 24 présentant une forme générale cylindrique d'axe C sensiblement parallèle à la direction X. Le support 12 comprend un unique orifice 26 de fixation, ménagé dans l'extrémité cylindrique 24. Cet orifice 26 est coaxial à l'axe C.

Le support 12 présente, d'une part, une surface d'appui interne 28a destinée à être en contact avec les câbles 14a, 14b, et d'autre part, une surface externe 28b, les deux surfaces 28a, 28b s'étendant d'un montant à l'autre en passant par la barre transversale 22. Les surfaces 28a, 28b sont engendrées par des génératrices parallèles à la direction Y. La surface 28a est dépourvue d'angle, notamment à la base des montants 18, 20, dans des zones de jonction 32, 34 entre les montants respectifs 18, 20 et la barre transversale 22. En l'espèce, les zones de jonction 32a, 34a de la surface interne 28a présentent des formes arrondies en portion de cylindre.

Les surfaces 28a et 28b sont séparées l'une de l'autre par des épaisseurs E1, E2 et E3 du support respectivement le long des montants 18, 20 et de la barre 22. Le support est agencé de sorte que cette épaisseur est maximale dans les zones de jonction 32, 34 à la base des montants. Ainsi les épaisseurs locales E4, E5 respectives des zones de jonction 32, 34 sont supérieures aux épaisseurs respectives E1, E2 et E3 des montants 18, 20 et de la barre 22. Les épaisseurs E4 et E5 sont ici mesurées dans le plan XZ suivant une direction diagonale par rapport aux axes X et Z.

Le support présente également une épaisseur générale E6 selon l'axe Y sensiblement constante le long des montants 18, 20 et de la barre 22.

Les surfaces 28a et 28b sont reliées entre elles par une nervure centrale ou âme 36 parallèle au plan XZ. Cette nervure présente une épaisseur selon l'axe Y inférieure à l'épaisseur générale E6 du support 12. Le support 12 comprend une structure en nid d'abeilles 38 reliant également les surfaces 28a et 28b. Cette structure 38 présente des parois 40 s'étendant parallèlement à la direction Y dans deux sens opposés à partir de la nervure centrale 36. Les parois 40 définissent des cellules 42 ayant une forme de base hexagonale. Ces cellules sont adjacentes les unes aux autres. Dans l'exemple illustré, en raison des dimensions du support 12 et des cellules 42, plus de la moitié au moins des cellules 42 du nid d'abeilles, et même les trois quarts, sont tronquées.

Le support 12 selon l'invention est en matière synthétique. Cette matière est une matière plastique. Cette matière comprend ici un polymère thermoplastique de type polyamide 6,6 renforcé avec des fibres de verre, en l'espèce dans une proportion massique d'environ 55%.

Les câbles 14a, 14b sont reçus entre les montants 18, 20 et s'étendent sensiblement parallèlement à l'axe Y.

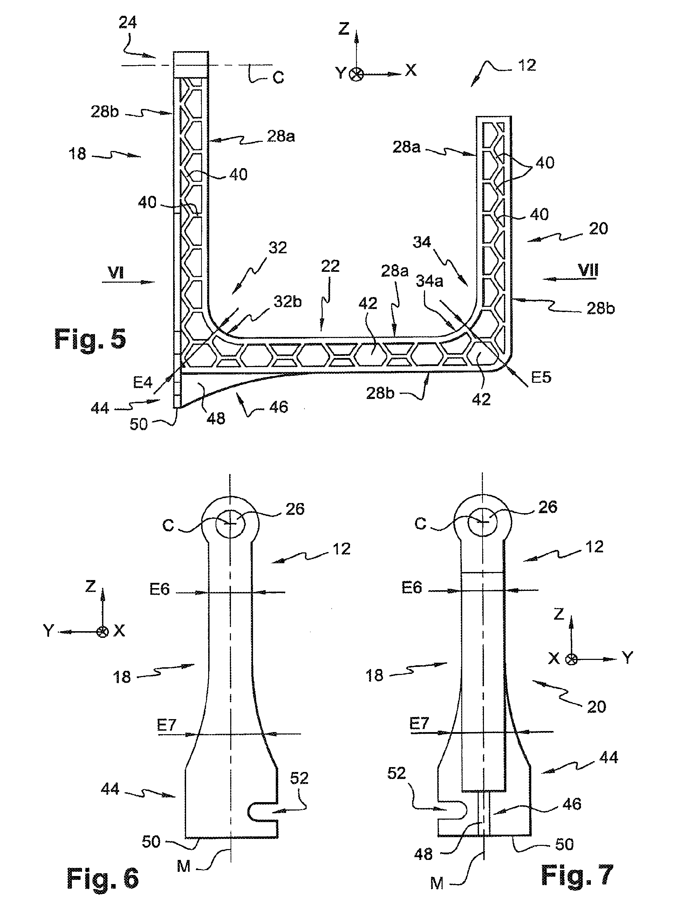

On a représenté sur les figures 5 à 7 un support selon un deuxième mode de réalisation de l'invention. Sur ces figures 5 à 7, les éléments analogues aux éléments représentés sur les figures précédentes sont désignés par des références identiques.

Dans ce deuxième mode de réalisation, le support ne présente plus de plan de symétrie mais un plan médian M parallèle au plan XZ et défini par les montants 18, 20. Le support 12 comprend, de plus, un prolongement inférieur 44 du montant long 18. Ce prolongement 44 est apte à servir d'appui latéral lorsque le support 12 est fixé à la paroi 16. Ce prolongement 44 est plan et sensiblement parallèle au plan YZ. Le prolongement 44 s'étend selon la direction Z au-delà d'un plan défini par la surface inférieure 28b de la barre 22. Le prolongement 44 présente une forme évasée s'élargissant en s'éloignant de l'extrémité 24 de sorte qu'il a, dans la direction Y, une dimension variable E7 supérieure ou égale à la dimension correspondante du montant 18, en l'espèce l'épaisseur générale E6 du support 12.

Dans ce deuxième mode de réalisation, le support 12 comporte une jambe de force 46. Cette jambe de force 46 comprend une nervure 48 reliant le prolongement 44 et la barre 22. Cette nervure 48 est plane, parallèle au plan XZ et s'étend dans le plan médian M. La nervure s'étend, relativement à la direction X, jusqu'à environ la moitié de la barre 22 et, relativement à la direction Z, entre l'extrémité inférieure libre 50 du prolongement et la surface inférieure 28b de la barre 22. Le bord inférieur de la nervure est courbe et concave.

Le support 12 comporte ici un deuxième orifice 52 ménagé dans le prolongement 44 permettant de fixer le support sur la paroi 16. Cet orifice 52 permet d'éviter que le support 12 ne tourne autour de l'axe C de l'orifice 24. Cet orifice 52 a ici la forme d'une échancrure débouchant sur le bord droit du prolongement 44. L'orifice 52 s'étend dans une moitié droite du prolongement à distance du plan médian M.

L'invention ne se limite pas aux modes de réalisation précédemment décrits.

On pourra modifier les dimensions du support en fonction du nombre de câbles qu'il doit supporter. Ainsi, à titre d'exemple, les montants 18, 20 et la barre transversale 22 présenteront des dimensions variant du décimètre au mètre.

Dans les premier et deuxième modes de réalisation du support, ce dernier pourra ne pas comprendre de barre transversale 22 mais uniquement deux montants 18, 20 en regard l'un de l'autre, définissant par exemple une forme en « V ».

La structure en nids d'abeille 38 pourra comporter des cellules 42 de différentes forme et différentes tailles.

## Revendications

1. Support en matière synthétique pour câble à fibre optique, ce support (12) étant en forme générale de U ou de V avec deux montants (18, 20) en regard l'un de l'autre, ce support présentant une surface d'appui interne (28a) destinée à venir en contact avec au moins un câble (14a, 14b) et une surface externe (28b),
**caractérisé en ce qu'**il comprend une structure (38) en nid d'abeilles présentant des parois (40) définissant des cellules (42) adjacentes les unes aux autres et ayant une forme de base hexagonale, ces parois s'étendant sensiblement perpendiculairement à une nervure (36) reliant entre elles la surface d'appui interne et la surface externe.

2. Le support de la revendication 1, dans lequel les dimensions du support et des cellules de la structure en nid d'abeilles sont telles que la moitié au moins des cellules de la structure sont tronquées.

3. Le support de la revendication 2, dans lequel les trois quarts au moins des cellules de la structure en nid d'abeilles sont tronquées.

4. Le support de la revendication 1, comportant un prolongement (44) d'au moins un des montants (18), apte à servir d'appui latéral, le prolongement (44) présentant une dimension (E7), dans une direction perpendiculaire à un plan défini par les montants, supérieure à la dimension correspondante (E6) du montant (18) qui le porte.

5. Le support de la revendication 4, le support étant en forme générale de U et comportant une jambe de force (46) reliant le prolongement (44) à une barre transversale (22) du support reliant les deux montants (18, 20)

6. Le support de la revendication 1, agencé de sorte qu'une épaisseur locale (E4, E5) du support passe par un maximum à la base d'au moins un des montants (18, 20).

## Patentansprüche

1. Aufnahme aus synthetischem Material für Glasfaserkabel, wobei diese Aufnahme (12) allgemein U- oder V-förmig ist, mit zwei sich gegenüberliegenden Stützen (18, 20), wobei diese Aufnahme eine innere Auflagefläche (28a), die dazu bestimmt ist, mit mindestens einem Kabel (14a, 14b) in Kontakt zu kommen, und eine äußere Fläche (28b) aufweist, **dadurch gekennzeichnet, dass** sie eine wabenförmige Struktur (38) umfasst, die Wände (40) aufweist, die einander benachbarte Zellen (42) definieren und eine seckseckige Grundform haben, wobei sich diese Wände im Wesentlichen senkrecht zu einer Rippe (36) erstrecken, die die innere Auflagefläche und die äußere Fläche miteinander verbindet.

2. Aufnahme nach Anspruch 1, wobei die Abmessungen der Aufnahme und der Zellen der wabenförmigen Struktur derart sind, dass mindestens die Hälfte der Zellen der Struktur abgestumpft sind.

3. Aufnahme nach Anspruch 2, wobei mindestens drei Viertel der Zellen der wabenförmigen Struktur abgestumpft sind.

4. Aufnahme nach Anspruch 1, umfassend eine Verlängerung (44) mindestens einer der Stützen (18), die dazu geeignet ist, als seitliche Auflage zu dienen, wobei die Verlängerung (44) in einer senkrecht zu einer durch die Stützen definierten Ebene verlaufenden Richtung eine Abmessung (E7) aufweist, die größer als die entsprechende Abmessung (E6) der Stütze (18) ist, die sie trägt.

5. Aufnahme nach Anspruch 4, wobei die Aufnahme allgemein U-förmig ist und eine Druckstrebe (46) umfasst, die die Verlängerung (44) mit einer Querstange (22) der Aufnahme verbindet, die die beiden Stützen (18, 20) verbindet.

6. Aufnahme nach Anspruch 1, die derart angeordnet ist, dass eine örtliche Dicke (E4, E5) der Aufnahme an der Basis mindestens einer der Stützen (18, 20) durch einen Höchstwert geht.

## Claims

1. A support made of synthetic material for a fibre-optic cable, this support (12) being generally U- or V-shaped with two columns (18, 20) opposite to each other, this support having an internal bearing surface (28a) intended to come into contact with at least one cable (14a, 14b) and an external surface (28b),
**characterized in that** it comprises a honeycomb structure (38) having walls (40) defining cells (42) adjacent to each other and having a hexagonal base shape, these walls extending substantially perpendicular to a ridge (36) connecting to each other the inner bearing surface and the outer surface.

2. The support of claim 1, wherein the dimensions of the support and of the honeycomb structure cells are such that at least half of the structure cells are truncated.

3. The support of claim 2, wherein at least the third quarters of the honeycomb structure cells are truncated.

4. The support of claim 1, comprising an extension (44) of at least one of the columns (18), adapted to serve as a lateral bearing, the extension (44) having a dimension (E7), in a direction perpendicular to a plane defined by the columns, higher than the corresponding dimension (E6) of the column (18) that carries it.

5. The support of claim 4, the support being generally U-shaped and including a strut (46) connecting the extension (44) to a cross-bar (22) of the support connecting the two columns (18, 20).

6. The support of claim 1, arranged so that a local thickness (E4, E5) of the support crosses a maximum at the base of at least one of the columns (18, 20).
